# EUROPEAN PATENT SPECIFICATION

(11) **EP 2 911 282 B1**
(45) Date of publication and mention of the grant of the patent: **13.11.2019**
(21) Application number: 13790135.1
(22) Date of filing: 25.06.2013
(51) Int. Cl.: H02M 3/158, H02M 3/335, H02M 1/00

(54) **POWER SOURCE AND POWER SOURCE VOLTAGE REGULATING METHOD**
STROMQUELLE UND SPANNUNGSREGELVERFAHREN FÜR DIE STROMQUELLE
SOURCE D'ALIMENTATION ET PROCÉDÉ DE RÉGULATION DE TENSION DE SOURCE D'ALIMENTATION

(30) Priority: 16.10.2012 CN 201210393107
(43) Date of publication of application: 26.08.2015
(73) Proprietor: ZTE Corporation, Shenzhen, Guangdong 518057 (CN)
(72) Inventor: WANG, Linguo, Shenzhen Guangdong 518057 (CN); ZHANG, Bin, Shenzhen Guangdong 518057 (CN)
(74) Representative: Herzog IP Patentanwalts GmbH
(86) International application number: PCT/CN2013/077938
(87) International publication number: WO 2013/170808

(56) References cited:
- CN-A- 101 610 034
- CN-A- 101 672 872
- CN-A- 102 084 581
- CN-A- 102 403 894
- GB-A- 2 480 614
- JP-A- S63 249 470
- US-A1- 2008 231 115
- US-A1- 2008 231 115
- US-A1- 2009 309 568
- US-A1- 2011 029 795
- SYLVAIN MIERMONT ET AL: "A Power Supply Selector for Energy and Area-Efficient Local Dynamic Voltage Scaling", 3 September 2007 (2007-09-03), TED CIRCUIT AND SYSTEM DESIGN : POWER AND TIMING MODELING, OPTIMIZATION AND SIMULATION : 17TH INTERNATIONAL WORKSHOP, PATMOS 2007, GOTHENBURG, SWEDEN, SEPTEMBER 3-5, 2007 ; PROCEEDINGS; [LECTURE NOTES IN COMPUTER SCIENCE], SPRINGER, BERLIN, HEIDELBER, XP019098355, ISBN: 978-3-540-74441-2 * the whole document *

## Description

### TECHNICAL FIELD

The disclosure relates to the field of communications, in particularly to a power source and a power source voltage regulating method.

### BACKGROUND

In an electronic device, a power source is required to provide a rapid voltage regulating function in many occasions in order to minimize energy consumption, e.g. a Central Processing Unit (CPU) power supply, a power supply of a radio frequency power amplifier etc., and more typically, a power supply device of the radio frequency power amplifier.

In order to meet increasing demands of users for bandwidths, modulation modes of a communication system are becoming more and more complicated, and a prominent problem is low efficiency of radio frequency power amplifiers, which has become a bottleneck for the improvement of the whole communication system. In order to ensure the linearity of a linear power amplifier, a power supply voltage should be higher than a radio frequency signal peak voltage. Under the conventional direct current power supply mode, a power source output voltage is designed according to the maximum output power of a power amplifier, which results in low efficiency of the power amplifier and serious waste of electric energy when the output power of the power amplifier is relatively low. Therefore, the reduction of power amplifier loss has become the key of energy conservation and emission reduction of the communication system.

In the related arts, in order to improve the efficiency of a power amplifier under different output power, corresponding regulation is generally applied to a power supply voltage, i.e. a relatively high power supply voltage is applied when the output power of the power amplifier is relatively high while a relatively low power supply voltage is applied when the output power of the power amplifier is relatively low. Since voltage regulation of existing power source technologies is relatively slow, the existing power amplifier voltage regulation power supply technology is only applied to changes of output power in a relatively long period of time, e.g. when communication services are busy during daytime, an amplifier is close to its maximal output power and a relatively high voltage is applied for power supply; when there are less services at midnight, the output power of the amplifier is relatively low and a relatively low voltage is applied for power supply. Limited by the voltage regulation speed of the existing power source technologies, efficiency improvement for power amplifiers is limited using the solution above.

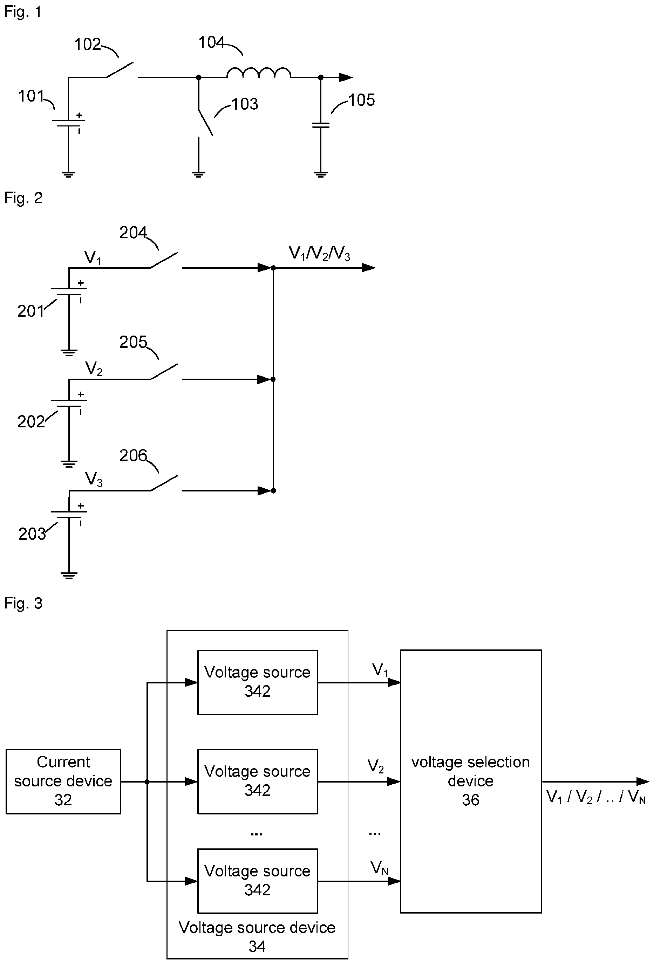

To further improve the efficiency of power amplifiers, the voltage regulation speed of power sources needs to be further increased. Fig. 1 is a structural diagram of a regular power source in the related arts. As shown in Fig. 1, the power source is a typical switch power source which has advantages of low loss and high efficiency because a power semiconductor thereof only works under an on/off state. The working principle is that, chopping is performed for an input power source 101 through complementary connection of switches 102 and 103, and different output voltages are acquired after subsequent filtering performed by an inductor 104 and a capacitor 105 according to the width of a chopping pulse signal. However, limited by low frequency filtering of the inductor and the capacitor, voltage regulation of such a power source is slow. The chopping frequency needs to be improved in order to accelerate the voltage regulation of the power source. At this point, losses of the switches 102 and 103 are increased accordingly. In addition, the capacitor 105 needs to be charged and discharged during the voltage regulation, and a relatively large charging and discharging current is required by a relatively high voltage regulating speed, which increases the conduction loss and reduce the power source conversion efficiency accordingly. Therefore, the power source shown in Fig. 1 is not applicable to rapid voltage regulation.

Fig. 2 is a structural diagram of a power source capable of rapid voltage regulation according to the related art. As shown in Fig. 2, rapid voltage regulation is performed by gating output of multiple independent input power sources 201, 202 and 203, i.e. when a switch 204 is turned on, the input power source 201 is connected to an output voltage (i.e. the output voltage of the whole power source is V₁); when a switch 205 is turned on, the input power source 202 is connected (i.e. the output voltage of the whole power source is V₂); when a switch 206 is turned on, the input power source 203 is connected (i.e. the output voltage of the whole power source is V₃). An output capacitor does not need to be charged and discharged during voltage regulation, thus improving the voltage regulation speed and efficiency. However, since multiple independent input power sources are needed, and generally, each independent input power source 201, 202 or 203 at least includes a group of devices consisting of two switches, one inductor and one capacitor etc. As shown in Fig. 1, there are problems of large power source volume, high cost and low efficiency.

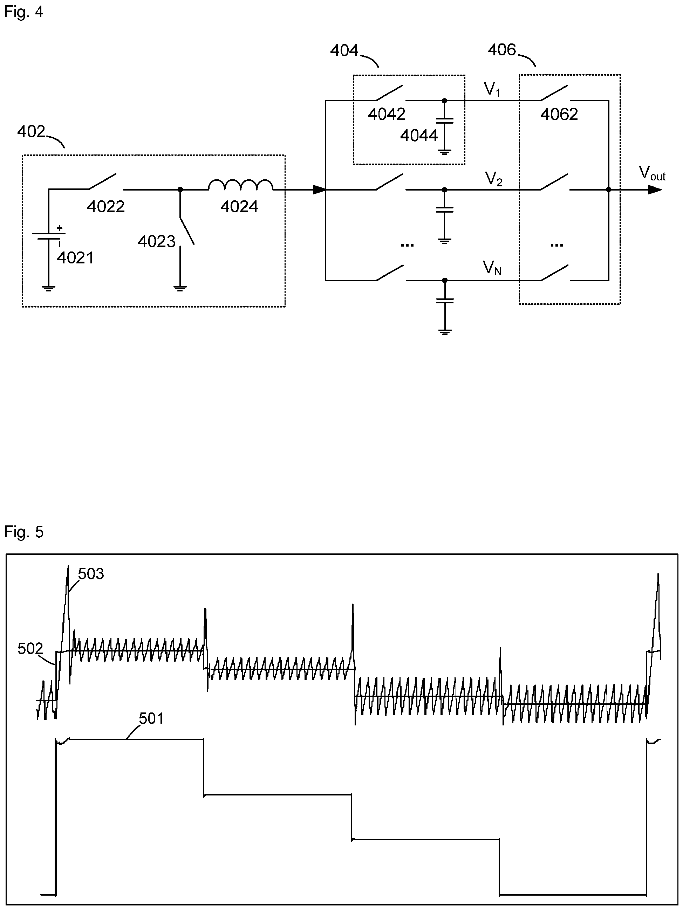

According to GB2480614 A, a switching stage comprises first and second switching paths (fig 4, 69,82) each having at least one switching element for selectively connecting an input of the switching stage to an output. A signal is selectively routed from the input of the switching stage to its output via the switching paths in dependence on the current of the signal to be routed. Each switching path can include an inductive element that is connected to higher or lower voltage levels according to the current. One path can be configured to handle a smaller current, and have a smaller size switching element, than the other. One path can include switch arrays (fig 4, 34,36) connecting the input to the output via intermediate lines, each having a capacitor, enabling different voltages to be generated and selected. The switching stage can provide an envelope tracking supply voltage to a radio frequency power amplifier.

According to JPS63249470 A, to improve the power efficiency of a multichannel inverter circuit and to miniaturize it by automatically charging an output smoothing condenser in a necessary amount according to an input voltage, monitoring the completion of charging of all output channels and regulating it.

According to US2008231115 A1, the invention relates to a DC/DC converter design. The converter requires only one single inductor to draw energy from one input source and distribute it to more than one outputs, employing Flexible-Order Power-Distributive Control (FOPDC). It include a single inductor, a number of power switches, comparators, only one error amplifier, a detecting circuit and a control block to regulate outputs. This converter can correctly regulate multiple outputs with fast transient response, low cross regulation, and effective switching frequency for each output. It can work in both discontinuous conduction mode (DCM) and continuous conduction mode (CCM). Moreover, with FOPDC, future output extension is simple, making a shorter time-to-market process for next versions of the converter. The design can be applied to different types of DC-DC converter.

According to a power supply selector for energy and area-efficient local dynamic voltage scaling, a local dynamic voltage scaling architecture, adapted to globally asynchronous and locally synchronous systems, is proposed.

According to US2011/029795 A1, a device for powering an electronic circuit applies at least a first voltage or a second voltage, different from the first voltage, to the electronic circuit. The device includes a performance monitor that receives an item of information defining a constraint and determines a first duration and a second duration, such that the operation of the electronic circuit at a first frequency associated with the first voltage for the first duration, and at a second frequency associated with the second voltage for the second duration, complies with the constraint. The device applies the first voltage and the first frequency to the circuit for the first duration and the second voltage and the second frequency for the second duration.

According to US2009/309568 A1, a power supply circuit is provided which includes a first booster to boost a power supply voltage supplied from a battery and generate a first boosted voltage, a second booster to boost the power supply voltage at a higher multiplication factor than the first booster and generate a second boosted voltage, a power supply selection circuit to output the first boosted voltage or the second boosted voltage, a first smoothing capacitor placed at an output end of the power supply selection circuit, and a second smoothing capacitor placed at an output end of the second booster.

### SUMMARY

Embodiments of the disclosure provide a power source and a power source voltage regulating method to at least solve the problems of slow voltage regulation and low efficiency of a voltage regulating power source in the related art.

The features of the method and device according to the present disclosure are defined in the independent claims, and the preferable features according to the present invention are defined in the dependent claims.

Through the embodiments of the disclosure, one current source device is used to supply power to multiple voltage sources in the voltage source device, so as to maintain the output voltages (V₁ to V_{N}) of the voltage sources stable; the voltage selection device selects the output of one of the voltage sources as an ultimate output voltage (Vₒᵤₜ) according to an actual voltage regulating demand, thereby significantly simplifying the structure of a multi-input power source, hence reducing the volume of the power source, reducing the cost, and improving the efficiency.

### BRIEF DESCRIPTION OF THE DRAWINGS

Fig. 1 is a structural diagram of a regular power source in the related art;
Fig. 2 is a structural diagram of a power source capable of rapid voltage regulation according to the related art;
Fig. 3 is a structural diagram of a power source according to an embodiment of the disclosure;
Fig. 4 is a structural diagram of a power source according to the first preferred embodiment of the disclosure;
Fig. 5 is a waveform diagram according to the first preferred embodiment of the disclosure;
Fig. 6 is a structural diagram of a power source having an isolating function according to the first preferred embodiment corresponding to Fig. 4;
Fig. 7 is a structural diagram of a power source according to the second preferred embodiment of the disclosure;
Fig. 8 is a structural diagram of a power source having an isolating function according to the second preferred embodiment corresponding to Fig. 7; and
Fig. 9 is a flowchart of a power source voltage regulating method according to an embodiment of the disclosure.

### DETAILED DESCRIPTION

It should be noted that the embodiments of the disclosure and the characteristics in embodiments may be combined with each other if there is no conflict. The disclosure will be described in details below with reference to the drawings and in combination with the embodiments.

The embodiments of the disclosure provide a power source. Fig. 3 is a structural diagram of a power source according to an embodiment of the disclosure. As shown in Fig. 3, the power source includes: a current source device 32, a voltage source device 34, and a voltage selection device 36, and the structure of the power source will be described in details below.

The current source device 32 is configured to provide a current signal to the voltage source device 34; the voltage source device 34 is connected to the current source device 32, includes multiple voltage sources 342, and is configured to convert the current signal from the current source device 32 into a voltage signal; the voltage selection device 36 is connected to the voltage source device 34, and is configured to select one of voltage signals from multiple voltage sources 342 as an output voltage signal.

In the related art, a voltage regulating power source is slow in voltage regulation and low in efficiency. In the embodiment of the disclosure, one current source device is used to supply power to multiple voltage sources in the voltage source device, so as to maintain the output voltages (V₁ to V_{N}) of the voltage sources stable; the voltage selection device selects the output of one of the voltage sources as an ultimate output voltage (Vₒᵤₜ) according to an actual voltage regulating demand, thereby significantly simplifying the structure of a multi-input power source, hence reducing the volume of the power source, reducing the cost, and improving the efficiency.

The current source device 32 may be implemented by at least two methods as follows:
(1) the current source device 32 includes: a first input power source, a first switch, a second switch and a first inductor, wherein a cathode of the first input power source is grounded, and an anode is connected to one end of the first switch; the other end of the first switch is connected to the second switch and the first inductor, and the second switch is grounded; the other end of the first inductor is an output end of the current source device 32;
   preferably, besides the first input power source, the first switch, the second switch and the first inductor, the current source device 32 may further include an isolating circuit configured to implement an isolating function, i.e. an output voltage and an input power source are different in reference grounds; the isolating circuit includes, but is not limited to one of the followings: a forward converter, a flyback converter, a bridge circuit and a push-pull circuit; an isolating device in the isolating circuit is a transformer.
   Description is provided below by taking a transformer as an example. To implement the isolating function, the current source device 32 further includes a transformer and a third switch, wherein one end of a primary side of the transformer is connected to the anode of the first input power source, and the other end is connected to one end of the third switch; the other end of the third switch is connected to the cathode of the first input power source; one end of a secondary side of the transformer is connected to the first switch, and the other end is connected to a grounded end of the second switch.
(2) the current source device 32 includes: a second input power source, a second inductor and a fourth switch, wherein a cathode of the second input power source is grounded, and an anode is connected to one end of the second inductor; the other end of the second inductor is an output end of the current source device 32 and connected to one end of the fourth switch, and the other end of the fourth switch is grounded.

In such an implementation method, in order to implement the isolating function, the current source device 32 further includes: a third input power source, an insolating circuit and a fifth switch, wherein the isolating circuit includes, but is not limited to one of the followings: a forward converter, a flyback converter, a bridge circuit and a push-pull circuit; an isolating device in the isolating circuit is a transformer.

To describe by taking a transformer as an example, the connecting relations of all components are as follows: a cathode of the third input power source is grounded, and an anode is connected to one end of a primary side of the transformer; the other end of the primary side is connected to one end of the fifth switch; the other end of the fifth switch is connected to the cathode of the third input power source; one end of a secondary side of the transformer is connected to an output end of the current source device 32 and the other end is grounded.

The voltage source 342 includes: a sixth switch and a capacitor, wherein one end of the sixth switch is connected to the current source device 32, and the other end is an output end of the voltage source and connected to one end of the capacitor; the other end of the capacitor is grounded. The voltage source 342 is simple in structure, thus saving the cost of the power source.

Preferably, the voltage selection device 36 includes multiple switches respectively connected to multiple voltage sources in the voltage source device.

Preferably, the switches include, but are not limited to at least one of the followings: triodes, MOS tubes, diodes, and JFETs. Specifically, the switches may consist of triodes, MOS tubes, diodes, or a combination of the three kinds of devices above. In order to prevent the problem of a short circuit of the voltage source caused by a unidirectional blocking switch device such as a triode and an MOS tube etc., the switches may also consists of switch devices such as JFETs having a bidirectional blocking characteristic. Of course, besides the switches above, switches of other types are also applicable to the disclosure.

The power source has a rapid voltage regulating function and may be applied to a power supply device of a radio frequency amplifier.

To make the technical solutions and implementation methods of the disclosure clearer, several specific implementation methods of the power source will be described in details below in conjunction with preferred embodiments.

### Preferred embodiment 1

Fig. 4 is a structural diagram of a power source according to the first preferred embodiment of the disclosure. As shown in Fig. 4, in the preferred embodiment, a current source device 402 is a possible specific implementation circuit in the current source device 32 in Fig. 3 and includes: an input power source 4021, a first switch 4022, a second switch 4023 and an inductor 4024, wherein, when the first switch 4022 is turned on and the second switch 4023 is turned off, the input power source 4021 charges the inductor 4024, and a current of the inductor increases; when the first switch 4022 is turned off and the second switch 4023 is turned on, the current of the inductor decreases.

A voltage source 404 is a possible implementation mode of the voltage source 342 in the voltage source device 34 in Fig. 3, and includes a third switch 4042 and a capacitor 4044. When the third switch 4042 is turned on, the current of the inductor charges the capacitor 4044 to maintain the output voltage V₁ of the voltage source 404 stable. Correspondingly, the output voltages V₂ to V_{N} of other voltage sources are maintained stable through the current of the capacitor.

A voltage selection circuit 406 is a possible implementation circuit of the voltage selection device 36 in Fig. 3. When a fourth switch 4062 is turned on, an input voltage V₁ is introduced selectively as an output voltage Vₒᵤₜ. Correspondingly, when a certain switch is turned on, an output voltage (V₁ to V_{N}) of a voltage source corresponding to the switch will be taken as an output voltage Vₒᵤₜ of the whole power source.

To further facilitate understanding, Fig. 5 shows an illustrative waveform corresponding to the preferred embodiment. 501 is an output voltage of a rapid voltage regulating power source, 502 is a load current (e.g. a resistance load) and 503 is an output current of the current source device 402.

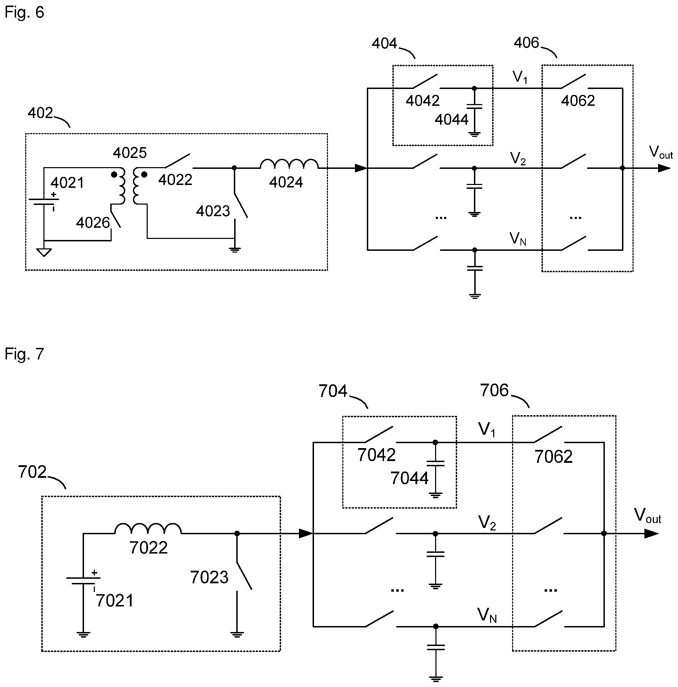

Fig. 6 is a structural diagram of a power source having an isolating function according to the first preferred embodiment corresponding to Fig. 4. The isolating function means that the reference grounds of an output voltage and an input power source may be different. As shown in Fig. 6, the current source device 402 is a possible specific implementation circuit having an isolating function of the current source device 32 in Fig. 3 and the isolating function of the input and output is implemented by a transformer 4025. When a fifth switch 4026 is turned on, a voltage of the input power source 4021 is sensed to the secondary side through the transformer 4025 and the inductor 4024 is charged through turning on the first switch 4022; when the fifth switch 4026 is turned off, the current of the inductor is supplemented through the second switch 4023. Specifically, the isolating function in the preferred embodiment may be also implemented by other expanded circuits, e.g. common topologies including double-tube forward converters, flyback converters, bridge circuits and push-pull circuits etc. in the field of isolating power sources.

### Preferred embodiment 2

Fig. 7 is a structural diagram of a power source according to the second preferred embodiment of the disclosure. As shown in Fig. 7, a current source device 702 is another possible specific implementation circuit of the current source device 32 in Fig. 3. When a first switch 7023 is turned on, an input power source 7021 charges an inductor 7022 and a current of the inductor increases; when the first switch 7023 is turned off, the current of the inductor charges a subsequent voltage source. Other parts accord with the structure as shown in Fig. 4 and will not be repeated here.

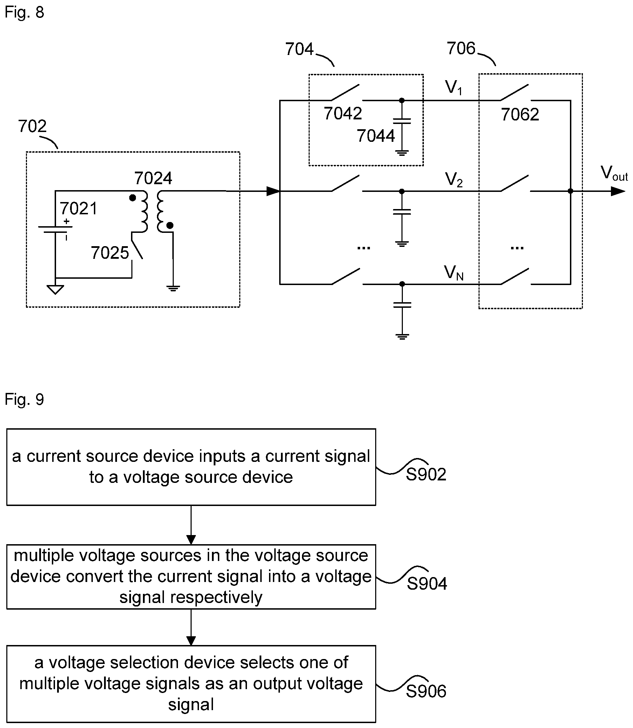

Fig. 8 is a structural diagram of a power source having an isolating function according to the second preferred embodiment corresponding to Fig. 7. In Fig. 8, the current source device 702 is another possible specific implementation circuit having an isolating function of the current source device 32 in Fig. 3, and the input and output isolating function is implemented by a transformer 7024. When a second switch 7025 is turned on, the input power source 7021 charges a primary side magnetizing inductor of the transformer 7024; when the second switch 7025 is turned off, a current of the primary side magnetizing inductor is switched back to the secondary side through the transformer 7024 so as to form an output current of the current source device 702 and charge a subsequent voltage source.

The embodiments of the disclosure further provide a power source voltage regulating method. The power source voltage regulating method may be implemented based on any one of the above power sources. Fig. 9 is a flowchart of a power source voltage regulating method according to an embodiment of the disclosure. As shown in Fig. 9, the method includes step 902 to step 906 as follows.

Step 902: a current source device inputs a current signal to a voltage source device;

Step 904: multiple voltage sources in the voltage source device convert the current signal into a voltage signal respectively;

Step 906: a voltage selection device selects one of multiple voltage signals as an output voltage signal;

Step 906 includes: the voltage selection device acquires different voltage magnitudes as output voltage signals through turning on different switches.

Preferably, the acquiring different voltage magnitudes through turning on different switches by the voltage selection device includes: turning on a switch in a voltage source, which is connected to a turned-on switch in the voltage selection device; a capacitor in a voltage source and the current source device form a voltage-stabilizing direct current power source (e.g. a Buck structure direct current power source or other voltage-stabilizing direct current power sources having a complement structure may be formed) to maintain voltage stabilization of the output of the power source under a load.

Preferably, the inputting the current signal to the voltage source device by the current source device includes: controlling an input power source in the current source device to charge an inductor; when a switch in the voltage source is turned on, a current in the inductor charges a capacitor in the voltage source.

Since a branch (including a voltage source and a switch in the voltage selection device connected to the voltage source) which is disconnected currently is not loaded, the output voltage of the voltage source may be maintained by the capacitor in the voltage source.

In the embodiments above, voltage regulation is realized efficiently by means of voltage selection. In addition, an independent input power source is applied to work simultaneously, thus realizing a simple structure, reducing the volume and cost. There are no other power sources working without load, thus realizing higher efficiency and faster voltage regulation response.

To sum up, a power source and a power source voltage regulating method are provided according to the embodiments of the disclosure. By means of the disclosure, one current source device is used to supply power to multiple voltage sources in the voltage source device, so as to maintain the output voltages (V₁ to V_{N}) of the voltage sources stable; the voltage selection device selects the output of one of the voltage sources as an ultimate output voltage (Vₒᵤₜ) according to an actual voltage regulating demand, thereby significantly simplifying the structure of a multi-input power source, hence reducing the volume of the power source, reducing the cost, and improving the efficiency.

Apparently, those skilled in the art should understand, that each module or each step of the embodiments of the disclosure can be realized with general computing devices; they can be centralized on a single computing device or distributed in a network consisting of multiple computing devices; alternatively, they can be realized through program codes that can be executed by computing devices so that they can be stored in storage devices and executed by computing devices, or they can be manufactured as each integrated circuit module respectively, or several modules or steps of them can be manufactured as a single integrated circuit. In this way, the disclosure is not limited to any specific combination of hardware and software, but only by the appended claims.

## Claims

1. A power source comprising:
a current source device (32), a voltage source device (34), and a voltage selection device (36), wherein
the current source device (32) is configured to provide a current signal to the voltage source device (34);
the voltage source device (34) is connected to the current source device (32), comprises multiple voltage sources (342), and is configured to convert the current signal from the current source device (32) into a voltage signal;
the voltage selection device (36) is connected to the voltage source device (34), and is configured to select one of voltage signals from multiple voltage sources (342) as an output voltage signal;
**characterized in that**
the power source is configured to operate only the voltage source which is currently selected by the voltage selection device, such that current from the current source device is only supplied to said selected voltage source.

2. The power source according to claim 1, wherein the current source device (32) comprises: a first input power source, a first switch, a second switch and a first inductor, wherein
a cathode of the first input power source is grounded and an anode is connected to one end of the first switch;
the other end of the first switch is connected to the second switch and the first inductor, and the second switch is grounded;
the other end of the first inductor is an output end of the current source device (32).

3. The power source according to claim 2, wherein the current source device (32) further comprises an isolating circuit, wherein the isolating circuit comprises one of the followings: a forward converter, a flyback converter, a bridge circuit and a push-pull circuit; an isolating device in the isolating circuit is a transformer.

4. The power source according to claim 3, wherein the current source device (32) further comprises a third switch, wherein
one end of a primary side of the transformer is connected to the anode of the first input power source, and the other end is connected to one end of the third switch; the other end of the third switch is connected to the cathode of the input power source;
one end of a secondary side of the transformer is connected to the first switch, and the other end is connected to the grounded end of the second switch.

5. The power source according to claim 1, wherein the current source device (32) comprises: a second input power source, a second inductor and a fourth switch, wherein
a cathode of the second input power source is grounded, and an anode is connected to one end of the second inductor;
the other end of the inductor is an output end of the current source device (32) and connected to one end of the fourth switch, and the other end of the fourth switch is grounded.

6. The power source according to claim 5, wherein the current source device (32) further comprises: a third input power source, an insolating circuit and a fifth switch; the isolating circuit comprises one of the followings: a forward converter, a flyback converter, a bridge circuit and a push-pull circuit; an isolating device in the isolating circuit is a transformer.

7. The power source according to claim 6, wherein a cathode of the third input power source is grounded and an anode is connected to one end of a primary side of the transformer; the other end of the primary side is connected to one end of the fifth switch; the other end of the fifth switch is connected to the cathode of the third input power source; one end of a secondary side of the transformer is an output end of the current source device (32) and the other end is grounded.

8. The power source according to any one of claims 1 to 7, wherein the voltage source (342) comprises: a sixth switch and a capacitor; one end of the sixth switch is connected to the current source device (32), the other end is an output end of the voltage source device (34) and connected to one end of the capacitor; the other end of the capacitor is grounded.

9. The power source according to any one of claims 1 to 7, wherein the voltage selection device (36) comprises multiple switches respectively connected to multiple voltage sources (342) in the voltage source device (34).

10. The power source according to any one of claims 2 to 7, wherein the switches include at least one of the followings: triodes, Metal-Oxide-Semiconductor, MOS, tubes, diodes, and Junction Field-Effect Transistors, JFET.

11. A power source voltage regulating method, applying the power source according to any one of claims 1 to 10 comprising:
inputting, by a current source device, a current signal to a voltage source device (S902) ;
converting, by multiple voltage sources in the voltage source device, the current signal into a voltage signal respectively (S904);
selecting, by a voltage selection device, one of multiple voltage signals as an output voltage signal (S906);
**characterized in that**
the power source voltage regulating method operates only the voltage source which is currently selected by the voltage selection device, such that current from the current source device is only supplied to said selected voltage source.

12. The method according to claim 11, wherein the selecting one of the multiple voltage signals as the output voltage signal by the voltage selection device comprises:
acquiring, by the voltage selection device, different voltage magnitudes as the output voltage signals through turning on different switches.

13. The method according to claim 12, wherein the acquiring different voltage magnitudes through turning on different switches by the voltage selection device comprises:
turning on a switch in a voltage source, which is connected to a turned-on switch in the voltage selection device; a capacitor in the voltage source and the current source device form a voltage-stabilizing direct current power source to maintain voltage stabilization of the output of the power source under a load.

14. The method according to claim 11, wherein the inputting the current signal to the voltage source device by the current source device comprises:
controlling an input power source in the current source device to charge an inductor;
when a switch in the voltage source is turned on, charging, by a current of the inductor, a capacitor in the voltage source.

## Patentansprüche

1. Stromquelle, umfassend:
eine Stromquellenvorrichtung (32), eine Spannungsquellenvorrichtung (34) und eine Spannungswahlvorrichtung (36), wobei
die Stromquellenvorrichtung (32) dazu eingerichtet ist, ein Stromsignal an die Spannungsquellenvorrichtung (34) zu liefern;
die Spannungsquellenvorrichtung (34) mit der Stromquellenvorrichtung (32) verbunden ist, mehrere Spannungsquellen (342) umfasst und dazu eingerichtet ist, das Stromsignal von der Stromquellenvorrichtung (32) in ein Spannungssignal zu wandeln;
die Spannungswahlvorrichtung (36) mit der Spannungsquellenvorrichtung (34) verbunden ist und dazu eingerichtet ist, eines der Spannungssignale von mehreren Spannungsquellen (342) als Ausgangsspannungssignal auszuwählen;
**dadurch gekennzeichnet, dass**
die Stromquelle dazu eingerichtet ist, nur die Spannungsquelle zu betreiben, die derzeit durch die Spannungswahlvorrichtung ausgewählt ist, sodass Strom von der Stromquellenvorrichtung nur der ausgewählten Spannungsquelle zugeführt wird.

2. Stromquelle nach Anspruch 1, wobei die Stromquellenvorrichtung (32) umfasst: eine erste Eingangsstromquelle, einen ersten Schalter, einen zweiten Schalter und einen ersten Induktor, wobei
eine Kathode der ersten Eingangsstromquelle geerdet ist und eine Anode mit einem Ende des ersten Schalters verbunden ist;
das andere Ende des ersten Schalters mit dem zweiten Schalter und dem ersten Induktor verbunden ist, und der zweite Schalter geerdet ist;
das andere Ende des ersten Induktors ein Ausgangsende der Stromquellenvorrichtung (32) ist.

3. Stromquelle nach Anspruch 2, wobei die Stromquellenvorrichtung (32) ferner eine Trennschaltung umfasst, wobei die Trennschaltung eine der folgenden Komponenten umfasst: einen Vorwärtswandler, einen Flyback-Wandler, eine Brückenschaltung und eine Gegentaktschaltung; wobei eine Trennvorrichtung in der Trennschaltung ein Transformator ist.

4. Stromquelle nach Anspruch 3, wobei die Stromquellenvorrichtung (32) ferner einen dritten Schalter umfasst, wobei
ein Ende einer Primärseite des Transformators mit der Anode der ersten Eingangsstromquelle verbunden ist, und das andere Ende mit einem Ende des dritten Schalters verbunden ist; das andere Ende des dritten Schalters mit der Kathode der Eingangsstromquelle verbunden ist;
ein Ende einer Sekundärseite des Transformators mit dem ersten Schalter verbunden ist, und das andere Ende mit dem geerdeten Ende des zweiten Schalters verbunden ist.

5. Stromquelle nach Anspruch 1, wobei die Stromquellenvorrichtung (32) umfasst: eine zweite Eingangsstromquelle, einen zweiten Induktor und einen vierten Schalter, wobei
eine Kathode der zweiten Eingangsstromquelle geerdet ist und eine Anode mit einem Ende des zweiten Induktors verbunden ist;
das andere Ende des Induktors ein Ausgangsende der Stromquellenvorrichtung (32) und mit einem Ende des vierten Schalters verbunden ist und das andere Ende des vierten Schalters geerdet ist.

6. Stromquelle nach Anspruch 5, wobei die Stromquellenvorrichtung (32) ferner umfasst: eine dritte Eingangsstromquelle, eine Trennschaltung und einen fünften Schalter; wobei die Trennschaltung eine der folgenden Komponenten umfasst: einen Vorwärtswandler, einen Flyback-Wandler, eine Brückenschaltung und eine Gegentaktschaltung; wobei eine Trennvorrichtung in der Trennschaltung ein Transformator ist.

7. Stromquelle nach Anspruch 6, wobei eine Kathode der dritten Eingangsstromquelle geerdet ist und eine Anode mit einem Ende einer Primärseite des Transformators verbunden ist; das andere Ende der Primärseite mit einem Ende des fünften Schalters verbunden ist; das andere Ende des fünften Schalters mit der Kathode der dritten Eingangsstromquelle verbunden ist; ein Ende einer Sekundärseite des Transformators ein Ausgangsende der Stromquellenvorrichtung (32) ist und das andere Ende geerdet ist.

8. Stromquelle nach einem der Ansprüche 1 bis 7, wobei die Spannungsquelle (342) umfasst: einen sechsten Schalter und einen Kondensator; wobei ein Ende des sechsten Schalters mit der Stromquellenvorrichtung (32) verbunden ist, das andere Ende ein Ausgangsende der Spannungsquellenvorrichtung (34) ist und mit einem Ende des Kondensators verbunden ist; das andere Ende des Kondensators geerdet ist.

9. Stromquelle nach einem der Ansprüche 1 bis 7, wobei die Spannungswahlvorrichtung (36) mehrere Schalter umfasst, die jeweils mit mehreren Spannungsquellen (342) in der Spannungsquellenvorrichtung (34) verbunden sind.

10. Stromquelle nach einem der Ansprüche 2 bis 7, wobei die Schalter mindestens eine der folgenden Komponenten aufweisen: Trioden, Metall-Oxid-Halbleiter, MOS, Röhren, Dioden und Junction Field-Effect Transistoren, JFET.

11. Spannungsregelungsverfahren für eine Stromquelle, mit Verwendung der Stromquelle nach einem der Ansprüche 1 bis 10, umfassend:
Eingeben eines Stromsignals in eine Spannungsquellenvorrichtung (S902) durch eine Stromquellenvorrichtung;
Umwandeln des Stromsignals in ein entsprechendes Spannungssignal (S904) durch mehrere Spannungsquellen in der Spannungsquellenvorrichtung;
Auswählen eines von mehreren Spannungssignalen als Ausgangsspannungssignal (S906) durch eine Spannungswahlvorrichtung;
**dadurch gekennzeichnet, dass**
das Spannungsregelungsverfahren der Stromquelle nur die Spannungsquelle betreibt, die derzeit durch die Spannungswahlvorrichtung ausgewählt ist, sodass Strom von der Stromquellenvorrichtung nur der ausgewählten Spannungsquelle zugeführt wird.

12. Verfahren nach Anspruch 11, wobei das Auswählen eines der mehreren Spannungssignale als Ausgangsspannungssignal durch die Spannungswahlvorrichtung umfasst:
Erfassen von unterschiedlichen Spannungsgrößen durch die Spannungswahlvorrichtung als Ausgangsspannungssignale durch Einschalten verschiedener Schalter.

13. Verfahren nach Anspruch 12, wobei das Erfassen unterschiedlicher Spannungsgrößen durch Einschalten verschiedener Schalter durch die Spannungswahlvorrichtung umfasst:
Einschalten eines Schalters in einer Spannungsquelle, der mit einem eingeschalteten Schalter in der Spannungswahlvorrichtung verbunden ist; wobei ein Kondensator in der Spannungsquelle und der Stromquellenvorrichtung eine spannungsstabilisierende Gleichstromquelle bilden, um die Spannungsstabilisierung des Ausgangs der Stromquelle unter einer Last aufrechtzuerhalten.

14. Verfahren nach Anspruch 11, wobei das Eingeben des Stromsignals in die Spannungsquellenvorrichtung durch die Stromquellenvorrichtung umfasst:
Steuern einer Eingangsstromquelle in der Stromquellenvorrichtung zum Laden eines Induktors;
wenn ein Schalter in der Spannungsquelle eingeschaltet wird, Laden eines Kondensators in der Spannungsquelle durch einen Strom des Induktors.

## Revendications

1. Source d'énergie comprenant :
un dispositif source de courant (32), un dispositif source de tension (34), et un dispositif de sélection de tension (36),
le dispositif source de courant (32) étant configuré de façon à fournir un signal de courant au dispositif source de tension (34) ;
le dispositif sources de tension (34) étant connecté au dispositif source de courant (32), comportant plusieurs sources de tension (342), et étant configuré de façon à convertir le signal de courant venant du dispositif source de courant (32) en un signal de tension ;
le dispositif de sélection de tension (36) étant connecté au dispositif sources de tension (34), et étant configuré de façon à sélectionner un des signaux de tension venant des sources de tension multiples (342) comme un signal de tension de sortie ;
**caractérisé en ce que**
la source d'énergie est configurée de façon à utiliser uniquement la source de tension qui est alors sélectionnée par le dispositif de sélection de tension, de manière à ce que le courant venant du dispositif source de courant ne soit alimenté qu'à ladite source de tension sélectionnée.

2. Source d'énergie selon la revendication 1, dans laquelle le dispositif source de courant (32) comprend :
une première source d'énergie d'entrée, un premier commutateur, un deuxième commutateur et une première bobine d'induction,
une cathode de la première source d'énergie d'entrée étant mise à la terre et une anode étant connectée à une extrémité du premier commutateur ;
l'autre extrémité du premier commutateur étant connectée au deuxième commutateur et à la première bobine d'induction, et le deuxième commutateur étant mis à la terre ;
l'autre extrémité de la première bobine d'induction étant une extrémité de sortie du dispositif source de courant (32).

3. Source d'énergie selon la revendication 2, dans laquelle le dispositif source de courant (32) comprend en outre un circuit de sectionnement, ce circuit de sectionnement comprenant un des composants suivants :
un convertisseur à transfert direct, un convertisseur à transfert indirect, un circuit à pont et un circuit push-pull ; un dispositif de sectionnement dans le circuit de sectionnement étant un transformateur.

4. Source d'énergie selon la revendication 3, dans laquelle le dispositif source de courant (32) comprend en outre un troisième commutateur :
une extrémité d'un côté primaire du transformateur étant connectée à l'anode de la première source d'énergie d'entrée, et l'autre extrémité étant connectée à une extrémité du troisième commutateur ;
l'autre extrémité du troisième commutateur étant connectée à la cathode de la source d'énergie d'entrée ;
une extrémité d'un côté secondaire du transformateur étant connectée au premier commutateur, et l'autre extrémité étant connectée à l'extrémité mise à la terre du deuxième commutateur.

5. Source d'énergie selon la revendication 1, dans laquelle le dispositif source de courant (32) comprend : une deuxième source d'énergie d'entrée, une deuxième bobine d'induction et un quatrième commutateur,
une cathode de la deuxième source d'énergie d'entrée étant mise à la terre et une anode étant connectée à une extrémité de la deuxième bobine d'induction ; l'autre extrémité de la bobine d'induction étant une extrémité de sortie du dispositif source de courant (32) et étant connectée à une extrémité du quatrième commutateur, et l'autre extrémité du quatrième commutateur étant mise à la terre.

6. Source d'énergie selon la revendication 5, dans laquelle le dispositif source de courant (32) comprend en outre : une troisième source d'énergie d'entrée, un circuit de sectionnement et un cinquième commutateur ; le circuit de sectionnement comprenant un des composants suivants : un convertisseur à transfert direct, un convertisseur à transfert indirect, un circuit à pont et un circuit push-pull ; un dispositif de sectionnement dans le circuit de sectionnement étant un transformateur.

7. Source d'énergie selon la revendication 6, dans laquelle une cathode de la troisième source d'énergie d'entrée est mise à la terre et une anode est connectée à une extrémité d'un côté primaire du transformateur ; l'autre extrémité du côté primaire est connectée à une extrémité du cinquième commutateur ; l'autre extrémité du cinquième commutateur est connectée à la cathode de la troisième source d'énergie d'entrée ; une extrémité d'un côté secondaire du transformateur est une extrémité de sortie du dispositif source de courant (32) et l'autre extrémité est mise à la terre.

8. Source d'énergie selon l'une quelconque des revendications 1 à 7, dans laquelle la source de tension (342) comprend : un sixième commutateur et un condensateur ; une extrémité du sixième commutateur est connectée au dispositif source de courant (32), l'autre extrémité est une extrémité de sortie du dispositif sources de tension (34) et est connectée à une extrémité du condensateur ; l'autre extrémité du condensateur est mise à la terre.

9. Source d'énergie selon l'une quelconque des revendications 1 à 7, dans laquelle le dispositif de sélection de tension (36) comprend plusieurs commutateurs connectés respectivement à des sources de tension multiples (342) dans le dispositif sources de tension (34).

10. Source d'énergie selon l'une quelconque des revendications 2 à 7, dans laquelle les commutateurs comprennent au moins un des composant suivants :
triodes, tubes à métal-oxyde-semiconducteur, MOS, diodes et transistors à effet de champ à jonction, JFET.

11. Procédé de régulation de tension de source d'énergie, appliquant la source d'énergie selon l'une quelconque des revendications 1 à 10, comprenant :
l'entrée, par un dispositif source de courant, d'un signal de courant dans un dispositif sources de tension (S902) ;
la conversion, par des sources de tension multiples dans le dispositif sources de tension, du signal de courant en un signal de tension respectivement (S904) ;
la sélection, par un dispositif de sélection de tension, d'un des signaux de tension multiples comme un signal de tension de sortie (S906) ;
**caractérisé en ce que**
ce procédé de régulation de la tension de la source d'énergie utilise uniquement la source de tension qui est alors sélectionnée par le dispositif de sélection de tension, de manière à ce que le courant venant du dispositif source de courant ne soit alimenté qu'à ladite source de tension sélectionnée.

12. Procédé selon la revendication 11, dans lequel la sélection d'un des signaux de tension multiples comme le signal de tension de sortie par le dispositif de sélection de tension comprend :
l'acquisition, par le dispositif de sélection de tension, de différentes grandeurs de tension comme les signaux de tension de sortie au moyen du branchement de différents commutateurs.

13. Procédé selon la revendication 12, dans lequel l'acquisition de plusieurs grandeurs de tension différentes grâce au branchement de différents commutateurs par le dispositif de sélection de tension comprend :
le branchement d'un commutateur dans une source de tension, qui est connectée à un commutateur branché dans le dispositif de sélection de tension ; un condensateur dans la source de tension et le dispositif source de courant formant une source d'énergie à courant continu stabilisant la tension afin de maintenir la stabilisation de la tension de la sortie de la source d'énergie sous une charge.

14. Procédé selon la revendication 11, dans lequel l'entrée du signal de courant dans le dispositif sources de tension par le dispositif source de courant comprend :
la commande d'une source d'énergie d'entrée dans le dispositif source de courant pour charger une bobine d'induction ;
quand un commutateur dans la source de tension est branché, la charge, par un courant de la bobine d'induction, d'un condensateur dans la source de tension.
